# EUROPEAN PATENT APPLICATION

(11) **EP 0 553 710 A2**
(43) Date of publication of application: **04.08.1993**
(21) Application number: 93100865.0
(22) Date of filing: 21.01.1993
(51) Int. Cl.: C07F 9/6568

(54) **Phospholene oxides**

(30) Priority: 28.01.1992 GB 9201765
(71) Applicant: ALBRIGHT & WILSON UK LIMITED, Oldbury, Warley, West Midlands B68 0NN (GB)
(72) Inventor: Coleman, Gregory Valentine, Torquay, Devon TQ2 8PN (GB); Price, Dennis, Heath Charnock, Chorley, Lancs. PR7 4DE (GB); Horrocks, Arthur Richard, Bolton, Lancs. BL1 6HJ (GB); Stephenson, James Edward, Harborne, Birmingham, B17 8RD (GB)
(74) Representative: Kinton, Colin David

(57) **Abstract**

A fully-conjugated diene or triene is reacted with a phosphorus trihalide to form a reaction intermediate. The reaction intermediate is then labilised with a solvent and reacted with a nucleophile to form the phospholene oxide.

## Description

The present invention relates to the synthesis of phospholene oxides.

Such compounds are part of the general class of cyclic phosphorus compounds which, because of their high phosphorus content, are desirable constituents of, e.g. flame retardant compositions.

They have been synthesised but in poor yields with only a few derivatives being prepared. Most literature refers to a reaction scheme involving an alkyl phosphorus dihalide and a diene. In addition poor yields and lengthy reaction times are reported when using phosphorus trichloride and butadiene.

We have now discovered that the above phospholene oxides can be synthesised in substantially improved yields and shortened reaction times.

### The Invention

In a first embodiment, the present invention provides a method for the production of a phospholene oxide, said method comprising the following stages:
(a) reacting a fully conjugated polyene with a phosphorus trihalide in a dry, inert, oxygen-free atmosphere and at a temperature of from 25°C to 60°C, to form a reaction intermediate;
(b) labilising said intermediate by means of a solvent and subjecting said labilised intermediate to further reaction with a nucleophile, in an inert atmosphere and at a temperature of from -70°C to 30°C, to form a phospholene oxide.

In stage (a) the fully conjugated polyene may suitably be a triene of general formula 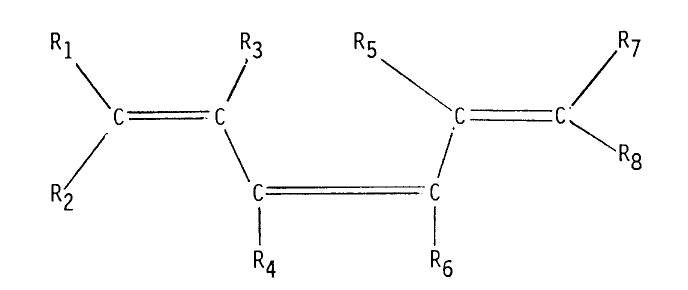
in which R₁, R₂, R₃, R₄, R₅, R₆, R₇ and R₈ independently represent hydrogen or C₁ to C₁₈ alkyl, aryl, alkaryl or aralkyl groups, or, preferably a diene of general formula 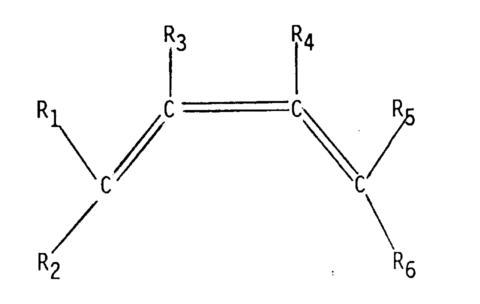
in which R₁, R₂, R₃, R₄, R₅ and R₆ independently represent hydrogen or C₁ to C₁₈ alkyl, aryl , alkaryl or aralkyl groups, such as butadiene, or especially 2-methyl-1,3-butadiene.

The phosphorus trihalide may suitably be of general formula PX₁X₂X₃ in which X₁_{,} X₂ and X₃ independently represent chloride, bromide or iodide, or, more preferably of general formula PX₃ in which X represents iodide, bromide or especially chloride.

Typically in stage (a) of the method according to the present invention said conjugated polyene, especially 2-methyl-1,3-butadiene and said phosphorus trihalide, especially phosphorus trichloride, are contacted in a reaction vessel, preferably by dropwise addition of the phosphorus trihalide to the conjugated polyene, in a ratio of from 5:1 to 1.1:1, preferably of about 2:1. The dry, inert oxygen-free atmosphere may suitably comprise a gas such as carbon dioxide, argon or nitrogen or a mixture of any of the above, but preferably consists essentially of nitrogen.

In a highly preferred method according to the present invention, said gas, e.g. nitrogen, is introduced into the reaction vessel at an initial vigorous flow rate such that the reactants are agitated, a suitable rate being e.g. 30ml min⁻¹, which flow rate is decreased such that the loss of volatiles is minimised, a suitable rate being e.g. 4ml min⁻¹, as the reaction temperature is increased, e.g. by external heating.

Said temperature may typically be of from 0 to 80°C, such as 25°C to 65°C especially of from 45°C to 55°C, for example about 50°C. Higher temperatures may be tolerated if a polymerisation inhibitor is included in the reaction mixture such as is conventionally known in the art, e.g. an oil soluble or dispersible copper salt such as a copper salt of a fatty acid, e.g. copper stearate, copper oleate, copper 2-ethylhexoate or copper naphthenate or preferably a N-substitued aryl compound, especially 1,2-dinitrobenzene.

It is preferable to exclude any organic solvents from the reaction mixture.

A typical reaction time for the above stage (a) according to the method of the present invention is from 10 to 30 hrs, such as from 15 to 24 hrs. e.g. about 20 hrs. The reaction intermediate may be isolated and purified by conventional methods.

In stage (b) of the method according to the present invention, said reaction intermediate may be suitably labilised by means of a solvent such as a chloro-substituted alkyl, aryl, alkaryl or aralkyl compound, especially dichloromethane, in an inert atmosphere.

Said nucleophile may typically be an oxygen nucleophile, eg. a straight or branched chain monohydric alcohol having up to 12 carbon atoms, e.g. propylene glycol, or ethylene oxide, propylene oxide, phenol, or a substituted phenol, e.g. benzoic acid, nitrophenol or phenylamine. Said nucleophile may alternatively be a nitrogen nucleophile such as a mono-amine or diamine or a sulphur nucleophile such as a thiol or a di-thiol. Oxygen nucleophiles are, however, preferred for the purposes of the present invention.

In a typical method according to the present invention, said nucleophile is contacted in a reaction vessel with said labilised reaction intermediate in a ratio of from 50:1 to 24:1, such as about 25:1, the addition time being from 0 to 40 minutes, such as about 10 minutes, or, more preferably, about 20 minutes.

The inert atmosphere may suitably comprise a gas such as is hereinabove described with respect to stage (a), typically maintained under a condition of flow, such as at a flow rate of 20ml min⁻¹.

The temperature of the reaction vessel may range from -70°C to +30°C. However, in a highly preferred method according to the present invention, said nucleophile is added to said reaction intermediate at a temperature of from -15°C to -5°C, preferably of about -10°C, and further reaction is carried out by agitation, eg. stirring, at ambient temperature.

The reaction may be carried out under basic conditions, e.g. by incorporation of a base such as triethylamine, or under acidic conditions, e.g. by omission of base. It is most preferred to carry out the reaction under acidic conditions, e.g. at a pH of about 1.0.

The reaction time may suitably be from 0.5 to 5hrs, such as 1 hour.

The product phospholene oxide may be isolated and purified according to conventional methods. Typically the reaction mixture is neutralised, e.g., in the case of an acidic reaction mixture, with saturated sodium hydrogen carbonate solution, and the product is recovered by solvent extraction, e.g. with dichloromethane.

Accordingly, the present invention further provides a phospholene oxide produced by the method hereinabove described.

There is still further provided, accordingly to the present invention, the use of a phospholene oxide produced by the method hereinabove described as a flame retardant for a polymeric material.

Suitable polymeric materials for the above purposes include polyurethane materials, especially cellular polyurethanes such as flexible or rigid polyurethane foams.

The present invention provides a convenient, high yield route from widely available and relatively inexpensive raw materials to cyclic phosphorus compounds which have considerable commercial potential by virtue of their or their derivatives' foreseeable applicability as e.g. components of flame retardant compositions, detergent formulations or as dispersing agents or wetting agents.

The invention will be further illustrated by the following Examples:

### Example 1

Three moles (261ml) of phosphorus trichloride were slowly added dropwise to three moles (300ml) of 2-methyl-1,3-butadiene and 1g of copper stearate polymerization inhibitor under an initially vigorously flowing dry nitrogen atmosphere. The resulting mixture was then heated to 50°C for 20 hours under a gently flowing atmosphere of dry nitrogen. The deep red/brown solid product was broken up and washed with petroleum ether 40-60 fraction (3x500ml), yield 500g.IR analysis identified this product as 1,1,1-trichloro-3-methyl-3-phospholene.

To 400ml of methylene chloride was added 25g (0.125 moles) of 1,1,1-trichloro-3-methyl-3-phospholene and the mixture stirred at -10°C under a flowing atmosphere of nitrogen. Distilled methanol 136ml (3 moles) was then slowly added over half an hour, and then stirred for 1 hour, the temperature being kept at -10°C throughout. The solution was then neutralised with saturated sodium hydrogen carbonate solution. The methylene chloride layer was separated and the aqueous layer extracted with methylene chloride (5x200ml). The organic layers were then recombined and the solvent removed, leaving a dark yellow oil in 83.5% yield, boiling point 75-79°C. Analysis by GC/MS, ¹HNMR, ¹³CNMR, ³¹PNMR and IR confirmed it to be 1-methoxy-3-methyl-2-phospholene oxide.

### Example 2

1,1,1-trichloro-3-methyl-3-phospholene was prepared as described in Example 1.

To 400ml of methylene chloride was added 25g (0.125 moles) of 1,1,1-trichloro-3-methyl-3-phospholene and the mixture stirred at -10°C under of flowing atmosphere of nitrogen. Distilled methanol 272ml (6 moles) was then added over 15 minutes, the temperature being kept at -10°C. The solution was then stirred for 30 minutes at room temperature. The solution was then neutralised with saturated sodium hydrogen carbonate solution. The methylene chloride layer was separated and the aqueous layer extracted with methylene chloride (5x200ml). The organic layers were then recombined and the solvent removed, leaving a dark yellow oil in 75% yield, boiling point 75-79°C. Analysis as before showed it to be 1-methoxy-3-methyl-3-phospholene oxide.

## Claims

1. A method for the production of a phospholene oxide, characterised by:
(a) reacting a fully-conjugated polyene with a phosphorus trihalide in a dry, inert, oxygen-free atmosphere and at a temperature of from 25°C to 60°C, to form a reaction intermediate;
(b) labilising said intermediate by means of a solvent and subjecting said labilised intermediate to further reaction with a nucleophile, in an inert atmosphere and at a temperature of from -70°C to 30°C, to form a phospholene oxide.

2. A method according to Claim 1, characterised in that the ratio of fully-conjugated polyene to phosphorus trihalide in stage (a) is from 5:1 to 1.1:1, preferably about 2:1.

3. A method according to Claim 1 or 2, characterised in that the ratio of nucleophile to reaction intermediate in stage (b) is from 50:1 to 24:1, preferably about 25:1.

4. A method according to any one of the preceding claims, characterised in that the fully-conjugated polyene is a diene of general formula: 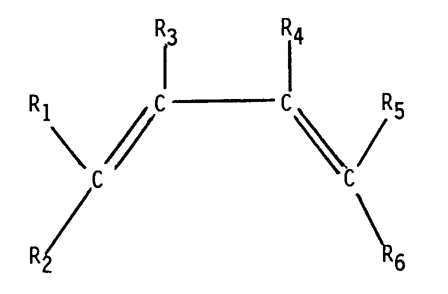 and in which R₁, R₂, R₃, R₄, R₅ and R₆ independently represent hydrogen or C₁ to C₁₈ alkyl, aryl, alkaryl or aralkyl groups.

5. A method according to any one of Claims 1 to 3, characterised in that the fully conjugated polyene is a triene of general formula 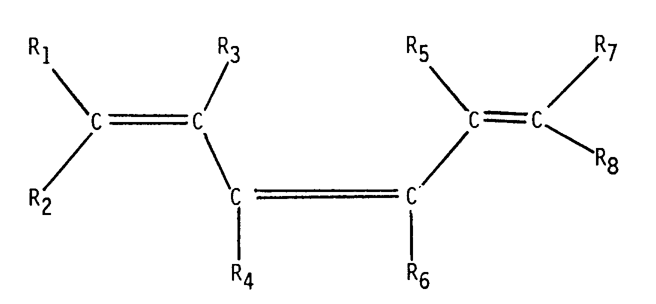 and in which R₁, R₂, R₃, R₄, R₅, R₆, R₇ and R₈ independently represent hydrogen or C₁ to C₁₈ alkyl, aryl, alkaryl or aralkyl groups.

6. A method according to any one of Claims 1 to 5, characterised in that the phosphorus trihalide is of general formula PX₁X₂X₃ in which x₁, X₂ and X₃ independently represent iodide, bromide or chloride.

7. A method according to any one of the preceding claims, characterised in that phosphorus trihalide is of general formula PX₃ in which X represents iodide, bromide or chloride.

8. A method according to Claim 4, 6 or 7, characterised in that the conjugated diene is 2-methyl-1,3-butadiene.

9. A method according to any one of the preceding claims, characterised in that the inert atmosphere in stage (a) consists essentially of nitrogen.

10. A method according to any one of the preceding claims, characterised in that the inert atmosphere is initially supplied to the reaction at a flow-rate of about 30ml min⁻¹, which flow-rate is decreased to about 4ml min⁻¹ as the reaction temperature is increased.

11. A method according to any one of the preceding claims, characterised in that stage (a) is carried out at a temperature of from 45°C to 55°C, preferably about 50°C.

12. A method according to any one of the preceding claims, characterised in that stage (a) is carried out in the absence of any organic solvents.

13. A method according to any one of the preceding claims, characterised in that stage (a) is carried out in the presence of a polymerisation inhibitor for the conjugated diene or triene.

14. A method according to Claim 13, characterised in that the polymerisation inhibitor is a copper salt of a fatty acid, for example copper stearate, copper oleate, copper 2-ethyl-hexoate or copper naphthanate.

15. A method according to Claim 13, characterised in that the polymerisation inhibitor is a N- substitued aryl compound, for example 1,2-dinitrobenzene.

16. A method according to any one of the preceding claims, characterised in that the solvent used in stage (b) is a chloro-substituted alkyl, aryl, alkaryl or aralkyl compound, for example dichloromethane.

17. A method according to any one of the preceding claims, characterised in that the nucleophile is a straight or branched chain monohydric alcohol having up to 8 carbon atoms (e.g. methanol), a straight or branched chain dihydric alcohol having up to 12 carbon atoms, ethylene oxide, propylene oxide, phenol, a substituted phenol, a mono-amine, a diamine, a thiol or a di-thiol.

18. A method according to any one of the preceding claims, characterised in that the nucleophile is added to the reaction intermediate in stage (b) at a temperature of from -15°C to -5°C, preferably about -10°C.

19. A method according to any one of the preceding claims, characterised in that following the addition of the nucleophile in stage (b), further reaction is carried out at ambient temperature.

20. A method according to any one of the preceding claims, in which stage (b) is carried out under acidic conditions.
